(19) Europäisches Patentamt
European Patent Office
Office européen des brevets

(11) **EP 3 582 394 B1**

(12) **EUROPEAN PATENT SPECIFICATION**

(45) Date of publication and mention
of the grant of the patent:
**24.02.2021 Bulletin 2021/08**

(51) Int Cl.:
***H02P 29/50*** *(2016.01)*

(21) Application number: **19177192.2**

(22) Date of filing: **29.05.2019**

(54) **A METHOD AND AN ARRANGEMENT FOR SUPPRESSING THE INFLUENCE OF A PERIODIC DISTURBANCE UPON A QUANTITY IN A TRACTION SYSTEM**

VERFAHREN UND ANORDNUNG ZUR UNTERDRÜCKUNG DES EINFLUSSES EINER PERIODISCHEN STÖRUNGEN AUF EINE MENGE IN EINEM TRAKTIONSSYSTEM

PROCÉDÉ ET AGENCEMENT DE SUPPRESSION DE L'INFLUENCE D'UNE PERTURBATION PÉRIODIQUE SUR UNE QUANTITÉ DANS UN SYSTÈME DE TRACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2018 SE 1850726**

(43) Date of publication of application:
**18.12.2019 Bulletin 2019/51**

(73) Proprietor: **Bombardier Transportation GmbH
10785 Berlin (DE)**

(72) Inventor: **Mosskull, Henrik
722 43 Västerås (SE)**

(74) Representative: **Bjerkéns Patentbyrå KB (Gävle)
Box 1274
801 37 Gävle (SE)**

(56) References cited:
**EP-A1- 3 163 731     US-A1- 2015 326 163**

- **CHEN WEN-HUA ET AL: "Disturbance-Observer-Based Control and Related Methods-An Overview", IEEE TRANSACTIONS ON INDUSTRIAL ELECTRONICS, IEEE SERVICE CENTER, PISCATAWAY, NJ, USA, vol. 63, no. 2, 1 February 2016 (2016-02-01), pages 1083-1095, XP011591274, ISSN: 0278-0046, DOI: 10.1109/TIE.2015.2478397 [retrieved on 2016-01-08]**
- **KARTTUNEN JUSSI ET AL: "Current Harmonic Compensation in Dual Three-Phase PMSMs Using a Disturbance Observer", IEEE TRANSACTIONS ON INDUSTRIAL ELECTRONICS, IEEE SERVICE CENTER, PISCATAWAY, NJ, USA, vol. 63, no. 1, 1 January 2016 (2016-01-01), pages 583-594, XP011593697, ISSN: 0278-0046, DOI: 10.1109/TIE.2015.2461519 [retrieved on 2015-12-10]**
- **AN QUNTAO ET AL: "Current Harmonics Suppression of Permanent Magnet Synchronous Motor Based on Repetitive Control", 2018 IEEE TRANSPORTATION ELECTRIFICATION CONFERENCE AND EXPO, ASIA-PACIFIC (ITEC ASIA-PACIFIC), IEEE, 6 June 2018 (2018-06-06), pages 1-7, XP033384260, DOI: 10.1109/ITEC-AP.2018.8433308 [retrieved on 2018-08-10]**

EP 3 582 394 B1

**Description**

TECHNICAL FIELD OF THE INVENTION

The present invention relates to a method for suppressing the influence of a first periodic disturbance upon a quantity in a traction system on board a railway vehicle as well as an arrangement for such suppression.

The system may be of any type, although an electric system may be mentioned by way of example.

"Periodic disturbance" is to be interpreted as a sinusoidal disturbance or a disturbance which may be approximated by a sum of a restricted number of sinusoidal influences.

In case of a traction system with a single-phase AC power supply a first periodic disturbance in the form of a second harmonic component of the voltage on the DC intermediate link connected to the output of a rectifier on board the railway vehicle will result, which means a periodic disturbance with twice the frequency of the periodic single-phase AC supply voltage. Such second harmonics will then directly affect the output voltage of the inverters on board the railway vehicle for feeding electric power to traction motors as well as to auxiliary loads, such as fans, pumps, compressors etc. on board the railway vehicle. Such second harmonics have to be suppressed for assuring that electric power pulsations do not lead to motor torque pulsations which may not only damage the mechanical system but also cause annoying noise and generate additional motor power losses. This problem is usually addressed by installing physical second harmonic filters in the DC intermediate link. These filters are then tuned to effectively shunt the oscillating power component and hence keep the voltage on the DC intermediate link constant. However, the second harmonic filters add weight, space and power losses to the system. It is for that sake desired to provide a said method to be able to remove these filters and instead suppress e.g. second harmonic torque oscillations through improved control of the converter acting as inverter when feeding electric energy to said motors and/or auxiliary loads and acting as rectifier when feeding electric energy in the opposite direction.

BACKGROUND ART

For suppression of the influence of a first periodic disturbance in the form of second harmonic DC intermediate link voltage oscillation several types of methods have been proposed in the literature, such as feedback methods relying on high bandwidth closed-loop current or torque control, feedforward methods adapting the inverter modulation index and only applicable in the so-called voltage control range and feedforward methods adapting the inverter output frequency, which in principle works both in the voltage control range and in the field weakening range. However, none of these methods are able to optimize suppression at all operating points.

The published european patent application EP3163731 A1 discloses a track-bound vehicle comprising a transformer, and electric power converters.

SUMMARY OF THE INVENTION

The object of the present invention is to provide a method and an arrangement according to the preambles of the corresponding appended claims being improved with respect to such methods and arrangements already known by addressing the problems thereof discussed above.

This object is with respect to the method according to the invention obtained by providing such a method with the features of appended patent claim 1.

Accordingly, by measuring the quantity in question, applying an adaptive algorithm on the result of this measurement calculating a second periodic disturbance which when applied to the system would make the total influence of said first and second periodic disturbances upon the quantity to a minimum, and applying the second periodic disturbance to influence said quantity, a type of adaptive feed-forward compensation technique, where performance is optimized under all operating conditions, is provided. Furthermore, since the proposed suppression algorithm automatically adapts parameters to optimize suppression of the disturbance, it can directly be added on top of existing control. That is, other functions already targeted to the same task need not to be modified. Thus, said first periodic disturbance is not in any way removed, but a second periodic disturbance is applied resulting in a suppression of the influence of the first periodic disturbance upon the quantity in question.

According to an embodiment of the invention the method comprises a further step d) carried out before step b) of measuring said first periodic disturbance, and in step b) the result of the measurement of the first periodic disturbance is used when applying said adaptive algorithm on the result of the measurement of said quantity. By measuring the first periodic disturbance the suppression may be further improved with quicker reaction upon changes of operating conditions of said system.

According to another embodiment of the invention a said second periodic disturbance with the same frequency as said first periodic disturbance is calculated in step b) and applied to influence said quantity in step c), which will result in an efficient suppression of the influence of said first periodic disturbance upon said quantity.

According to another embodiment of the invention the method comprises a further step e) carried out after step d) of determining the phase shift between the first periodic disturbance and said quantity, and the value of this phase shift determined is used when applying the adaptive algorithm on the result on the measurement of said quantity in step b). It can be shown that the phase shift between the first periodic disturbance and said quantity applied to said adaptive algorithm results in a possibility to efficiently suppress the influence of said first periodic disturbance upon said quantity.

According to another embodiment of the invention also the value of the amplitude of the first periodic disturbance measured in step d) is used when applying said adaptive algorithm on the result of the measurement of said quantity in step b). This is preferred, since with a linear system the required suppression action should be proportional to the amplitude of the disturbance.

The method may then according to another embodiment of the invention be applied to a system with a single-phase AC power supply resulting in a said first periodic disturbance, preferably in the form of a second harmonic of the voltage on a DC intermediate link, of the electric system, preferably with twice the frequency of the frequency of said single-phase AC power supply. Such a method will make it possible to remove second harmonic filters in a traction system on board a railway vehicle and hence save cost, weight, space and power losses. The method may also be used to improve e.g. second harmonic torque suppression with poorly tuned physical filters or to assure good torque disturbance suppression also with ageing filter components.

According to another embodiment of the invention the quantity measured in step a) is a mechanic quantity, such as a torque produced by an electric motor for propulsion of the vehicle fed by an inverter connected to said DC intermediate link. The method will then remove torque pulsations applied on wheel axels and motor components.

According to another embodiment of the invention the quantity measured in step a) is an electric quantity, such as the output current of an inverter connected to said DC intermediate link for feeding electric power to an electric motor for propulsion of the vehicle or auxiliary loads, such as fans, pumps, compressors etc. in the vehicle.

The object of the present invention is with respect to the arrangement obtained by providing an arrangement according to the appended independent arrangement claim. The advantages of such an arrangement and of the embodiments defined in the dependent arrangement claims appear clearly from the above discussion of the method according to the present invention.

The invention also relates to a computer program, computer program product, an electronic control unit and a rail vehicle according to the appended claims directed thereto.

Further advantages as well as advantageous features of the invention will appear from the description following below.

BRIEF DESCRIPTION OF THE DRAWINGS

With reference to the appended drawings, below follows a specific description of an embodiment of the invention cited as an example.

In the drawings:

Fig 1            illustrates very schematically a system for feeding electric power from a single-phase AC power supply to electric machines and auxiliary loads on a track-bound vehicle, which figure is used to explain a method according to an embodiment of the invention,

Fig 2            illustrates the principle upon which the present invention is based,

Fig 3            illustrates schematically a part of a method according to an embodiment of the invention,

Fig 4 and 5      are graphs showing simulation results of application of a method according to the present invention upon DC intermediate link voltage and torque produced by an electric motor of a railway vehicle, and

Fig 6            is a schematic view illustrating an electronic control unit for implementing a method according to the invention.

DETAILED DESCRIPTION OF AN EMBODIMENT OF THE INVENTION

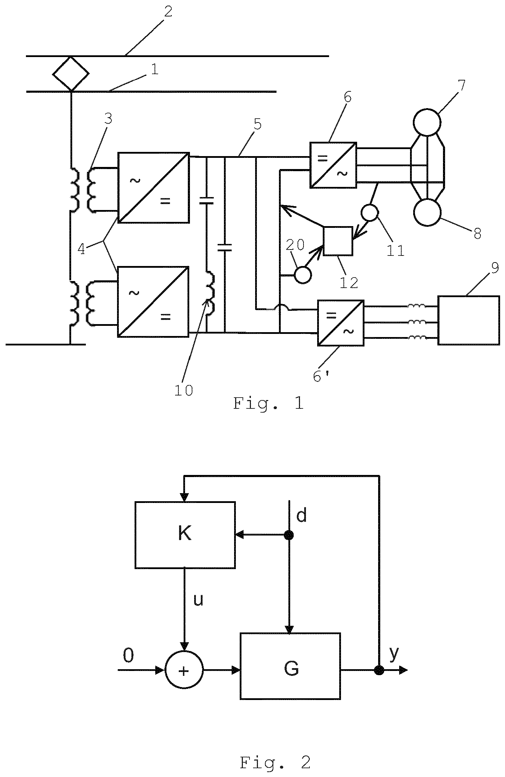

As mentioned in the introduction one interesting embodiment of the present invention is to use a method and arrangement thereof to suppress the influence of a periodic disturbance in a traction system with a single-phase AC power supply, and this embodiment will now be disclosed with reference firstly made to Fig 1. It is schematically illustrated how a railway vehicle 1 is connected to a single-phase AC electric power supply line 2, which may for example carry an alternating voltage of 15 kV and 16 2/3 Hz (Sweden) and 25 kV and 50 Hz (Denmark). Other levels of voltage and frequency for such a single-phase alternating AC power supply are of course conceivable. The vehicle has a transformer 3 for transforming the voltage from the supply line 2 to a suitable level. The secondary winding of the transformer is connected to converters 4 rectifying the voltage and making it possible to obtain a control of the power flow between the supply line and consumers of electric power on board the vehicle. The electric power P(t) so transferred from the AC side of the converter to the DC side of the converter is to be calculated as follows.

$$P(t) = \hat{u} sin(\omega t + \varphi_u)\, \hat{i} sin(\omega t + \varphi_i) =$$

$$= \frac{\hat{u}\,\hat{i}}{2}\left(cos(\varphi_u - \varphi_i) - cos(2\omega t + \varphi_u + \varphi_i)\right) \qquad (1)$$

from which it appears that the transferred power contains an AC component with a frequency being twice as high ($2\,\omega$) as the frequency on the AC side of the converters 4 and accordingly a second harmonic. This second harmonic may result in serious power pulsations in electric machines for propulsion of the vehicle and auxiliary loads on board the vehicle would no measures be taken to suppress the influence of such second harmonics upon these powers. It is shown how the DC intermediate link 5 is connected to a converter 6 acting as an inverter when feeding electric power from the AC supply line 2 to the vehicle and as a rectifier when feeding electric power in the opposite direction, such as when braking the vehicle. The output of the converter 6 is connected to electric machines (motors) 7, 8 for the propulsion of the vehicle. A further converter 6' is connected in parallel with the converter 6 and configured to provide auxiliary loads 9, such as fans, pumps, compressors etc., with electric power from the AC supply line 2.

It is illustrated how an LC filter 10 in the form of a so-called second harmonic link may be applied to the electric system for suppressing the second harmonic, but such filters add cost, weight, space and power losses to the system, and it is an object of the present invention to make such filters superfluous.

How this object is obtained by applying a method according to the present invention is illustrated in Fig 2. It is illustrated how a first periodic disturbance d in the form of said second harmonic is influencing the traction system G. A quantity y influenced by the first periodic disturbance, for instance the torque produced by the electric machines 7, 8 or the current on the output of the converter 6, is measured by a member 11 and an adaptive algorithm K is by a control unit 12 applied on the result on the measurement of the quantity y calculating a second periodic disturbance u which when applied to the system would make the total influence of the first periodic disturbance d and second periodic disturbance u upon the quantity y to a minimum, and this second periodic disturbance so calculated is then applied to influence the quantity y. The influence of the first periodic disturbance d, here the second harmonic, upon the quantity y will by this be efficiently suppressed. By measuring also the first periodic disturbance d by a member 20 and using the result of this measurement when applying said adaptive algorithm on the result of the measurement of the quantity y the reaction upon quick changes of d will be improved, but the method will in some applications do well without measurement of the first periodic disturbance.

The disturbance d will on the quantity y result in a periodic (sinusoidal) component $y_d(t)$, which will be represented as

$$y_d\left(t\right) = a_{yd}\sin\left(\omega_1 t + \varphi_{yd}\right) \qquad (2)$$

where a subscript d is added to denote that it is generated by the disturbance d(t). Thus, u(t) to be applied on the system for cancelling out the oscillation $y_d(t)$ caused by the disturbance d has to be calculated by applying the adaptive algorithm on the result of measurement of y(t). The second periodic disturbance fulfilling this may be written as

$$u\left(t\right) = a_u\sin\left(\omega_1 t + \varphi_u\right) \qquad (3)$$

where the amplitude $a_u$ and phase $\varphi_u$ hence are design variables to be updated with the operating point. If the disturbance d is measured we may use

$$a_u = k_u a_d \qquad (4)$$

$$\varphi_u = \varphi_d + \Delta\varphi_u \qquad (5)$$

in which $a_d$ and $\varphi_d$ are the amplitude and phase of the disturbance and $k_u$ and $\Delta\varphi_u$ are new design variables. The task of the adaptive algorithm is to adapt the amplitude $a_u$ and phase $\varphi_u$ of the added input components u(t) in (3) to cancel the total output component on y caused by d(t) and u(t) applied on the system. Input to the algorithm is the difference between the phase angles $\varphi_y$ and $\varphi_d$ of the (sinusoidal) disturbance on the output y and the (sinusoidal) disturbance d, and three design parameters a, $K_i$ and $K_{i2}$ are added. The latter two control the convergence rate, whereas the parameter a has been added to maximize the domain of attraction.

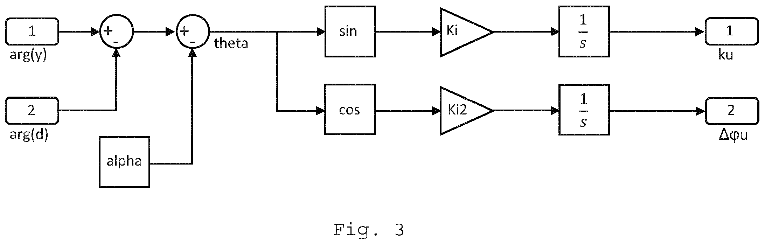

Fig 3 illustrates how an adaption of the compensation parameters $k_u$ and $\Delta\varphi_u$ is obtained. Note that only the arguments and not the amplitudes of the disturbance and total output are used as input to the adaptive algorithm in Fig 3.

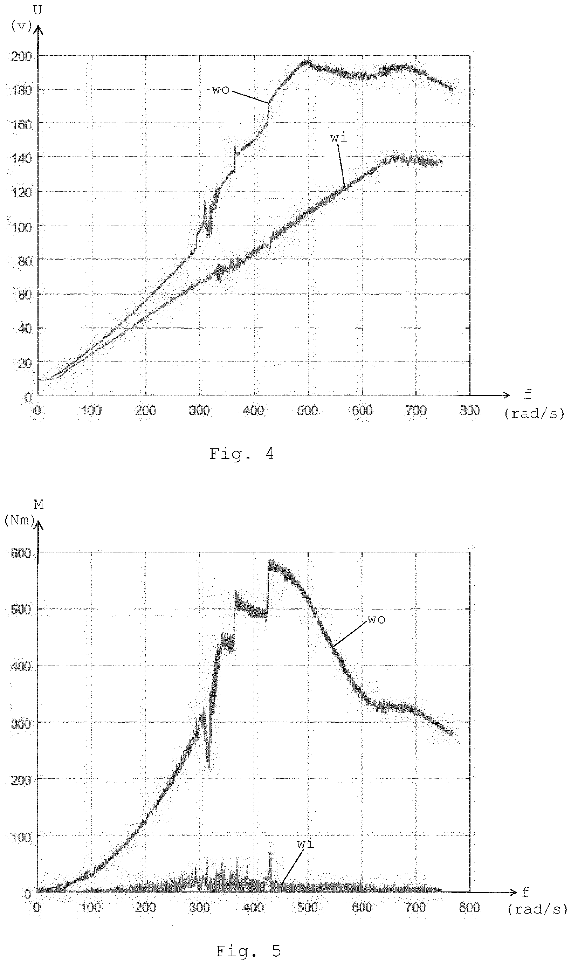

Simulations have been done on a traction system having no second harmonic filters without using an arrangement of the present invention to apply a method according to the present invention thereon and with such an arrangement and method applied thereon. The results of these simulations are shown in Fig 4 and Fig 5. Fig 4 illustrates the oscillation amplitude of the second harmonic component (100 Hz) of the intermediate DC link voltage U versus stator frequency f of an electric machine of the railway vehicle, whereas Fig 5 shows the oscillation amplitude of the second harmonic component (100 Hz) of the torque M produced by the electric machine versus said frequency. wo is without the present invention and wi with use of the adaptive algorithm of the present invention. It appears that the method according to the present invention is very efficient in cancelling out said second harmonics of the motor torque. It appears from Fig 4 that the method according to the invention does also have an influence upon the oscillation amplitude of the DC voltage, which means that the oscillations of the torque do without the method according to the invention contribute to further increase the oscillations of the voltage.

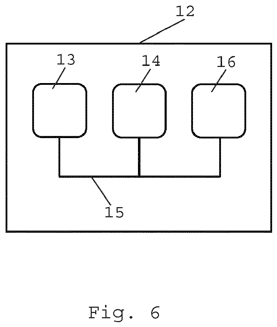

Computer program code for implementing a method according to the invention is with advantage included in a computer program which can be read into the internal memory of a computer, e.g. the internal memory of an electronic control unit of a track-bound vehicle. Such a computer program is with advantage provided with a computer program product comprising a data storage medium which can be read by a computer and which has the computer program stored on it. Fig 6 illustrates very schematically an electronic control unit 12 comprising an execution means 13, e.g. a central processor unit (CPU) for execution of computer software. The execution means 13 communicates with a memory 14, e.g. of the RAM type, via a data bus 15. The control unit 12 also comprises a non-transitory data storage medium 16, e.g. in the form of a flash memory or a memory of the ROM, PROM, EPROM or EEPROM type. The execution means 13 communicates with the data storage medium 16 via the data bus 15. The computer program comprises computer program code for implementing a method according to the invention.

The quantity influenced by a first periodic disturbance may, but has not to be an electric quantity. It may for instance be a torque as above. And it may also have no real connection to the feeding of electric power to a system. The quantity may for instance be the speed of a railway vehicle. A velocity value may be obtained by measuring the number of revolutions of a wheel axle of the vehicle through a mechanical component having some defect. By adding a second periodic disturbance a correct velocity value may be obtained.

## Claims

1. A method performed in a traction system on board a railway vehicle (1), for suppressing the influence of a first periodic disturbance (d) upon a measured quantity (y) in said traction system on board said railway vehicle (1), wherein it is the influence of the first periodic disturbance (d), in the form of an AC component in an electric system of the traction system, upon the quantity (y) in said electric system that is to be suppressed, the method comprises the following steps:

   a) measuring said quantity (y),
   b) applying an adaptive algorithm (K) on the result of the measurement of said quantity (y) calculating a second periodic disturbance (u) which when applied to the system would make the total influence of said first and second periodic disturbances upon said quantity to a minimum, and
   c) applying said second periodic disturbance (u) to influence said quantity (y).

2. A method according to claim 1, **characterized in that** it comprises a further step d) carried out before step b) of measuring said first periodic disturbance (d), and that in step b) the result of the measurement of the first periodic disturbance is used when applying said adaptive algorithm (K) on the result of the measurement of said quantity (y).

3. A method according to claim 1 or 2, **characterized in that** a said second periodic disturbance (u) with the same frequency as said first periodic disturbance (d) is calculated in step b) and applied to influence said quantity (y) in step c).

4. A method according to claim 2, **characterized in that** it comprises a further step e) carried out after step d) of determining the phase shift between the first periodic disturbance (d) and said quantity (y), and the value of this phase shift determined is used when applying the adaptive algorithm (K) on the result of the measurement of said quantity in step b).

5. A method according to claim 4, **characterized in that** also the value of the amplitude ($a_d$) of the first periodic disturbance (d) measured in step d) is used when applying said adaptive algorithm (K) on the result of the measurement of said quantity (y) in step b).

6. A method according to any preceding claim, **characterized in that** it is applied to a system with a single-phase AC power supply (2) resulting in a said first periodic disturbance (d), preferably in the form of a second harmonic of the voltage on a DC intermediate link (5), of the electric system, with preferably twice the frequency of the frequency of said single-phase AC power supply.

7. A method according to claim 6, **characterized in that** the quantity (y) measured in step a) is a mechanic quantity, such as a torque produced by an electric motor (7, 8) for propulsion of the vehicle fed by an inverter (6) connected to said DC intermediate link (5).

8. A method according to claim 6, **characterized in that** the quantity (y) measured in step a) is an electric quantity, such as the output current of an inverter (6) connected to said DC intermediate link (5) for feeding electric power to an electric motor (7, 8) for propulsion of the vehicle or auxiliary loads (9), such as fans, pumps, compressors etc. in the vehicle.

9. An arrangement in a traction system on board a railway vehicle (1), for suppressing the influence of a first periodic disturbance (d) upon a quantity (y) in said traction system on board said railway vehicle (1), wherein it is the influence of the first periodic disturbance (d), in the form of an AC component in an electric system of the traction system, upon the quantity (y) in said electric system that is to be suppressed, comprising

   • a member (11) configured to measure said quantity, and
   • a control unit (12) configured to receive information from said member about said quantity,
   • said control unit is configured to apply an adaptive algorithm (K) thereon so as to calculate a second periodic disturbance (u) which when applied to the system would make the total influence of said first and second periodic disturbances upon said quantity to a minimum and to apply said second periodic disturbance (u) to influence said quantity (y).

10. An arrangement according to claim 10, **characterized in that** it further comprises a member (20) configured to measure said first periodic disturbance (d), and that the control unit (12) is configured to use the result of the measurement of the first periodic disturbance (d) when applying said adaptive algorithm (K) on the result of the measurement of said quantity (y).

11. A computer program comprising computer program code for causing a computer to implement a method according to any of claims 1-8 when the computer program is executed by a computer.

12. A computer program product comprising a non-transitory data storage medium which can be read by a computer and on which the program code of a computer program according to claim 11 is stored.

13. An electronic control unit comprising an execution means (13), a memory (14) connected to the execution means and an non-transitory data storage medium (16) which is connected to the execution means (13) and on which the computer program code of a computer program according to claim 11 is stored.

14. A rail vehicle, **characterized in that** it is provided with an arrangement according to any of claims 9 or 10 or an electronic control unit (12) according to claim 13.

**Patentansprüche**

1. Verfahren, das in einem Traktionssystem an Bord eines Schienenfahrzeugs (1) durchgeführt wird, um den Einfluss einer ersten periodischen Störung (d) auf eine Größe (y) in dem Traktionssystem an Bord des Schienenfahrzeugs (1) zu unterdrücken, wobei es der Einfluss der ersten periodischen Störung (d), welche die Form eines Wechselstromanteils in einem elektrischen System des Traktionssystems hat, auf die Größe (y) des elektrischen Systems ist, der zu unterdrücken ist, wobei das Verfahren folgende Schritte umfasst:

   a) Messen der Größe (y),
   b) Anwenden eines adaptiven Algorithmus (K) auf das Ergebnis der Messung der Größe (y), wobei eine zweite periodische Störung (u) berechnet wird, die bei Anwendung auf das System den Gesamteinfluss der ersten und zweiten periodischen Störung auf die Größe auf ein Minimum setzen würde, und
   c) Anwenden der zweiten periodischen Störung (u), um die Größe (y) zu beeinflussen.

2. Verfahren nach Anspruch 1, **dadurch gekennzeichnet, dass** es einen weiteren Schritt d) der Messung der ersten periodischen Störung (d) umfasst, der vor Schritt b) durchgeführt wird, und dass in Schritt b) das Ergebnis der Messung der ersten periodischen Störung verwendet wird, wenn der adaptive Algorithmus (K) auf das Ergebnis der Messung der Größe (y) angewendet wird.

3. Verfahren nach Anspruch 1 oder 2, **dadurch gekennzeichnet, dass** die zweite periodische Störung (u) mit der gleichen Frequenz wie die erste periodische Störung (d) in Schritt b) berechnet wird und angewendet wird, um die Größe (y) in Schritt c) zu beeinflussen.

4. Verfahren nach Anspruch 2, **dadurch gekennzeichnet, dass** es einen weiteren Schritt e) umfasst, der nach Schritt d) durchgeführt wird, um die Phasenverschiebung zwischen der ersten periodischen Störung (d) und der Größe (y) zu bestimmen, und der Wert dieser Phasenverschiebung verwendet wird, wenn der adaptive Algorithmus (K) auf das Ergebnis der Messung der Größe in Schritt b) angewendet wird.

5. Verfahren nach Anspruch 4, **dadurch gekennzeichnet, dass** auch der in Schritt d) gemessene Wert der Amplitude $(a_d)$ der ersten periodischen Störung (d) verwendet wird, wenn der adaptive Algorithmus (K) auf das Ergebnis der Messung der Größe (y) in Schritt b) angewendet wird.

6. Verfahren nach einem der vorhergehenden Ansprüche, **dadurch gekennzeichnet, dass** es auf ein System mit einer einphasigen Wechselstromversorgung (2) angewendet wird, was zu der ersten periodischen Störung (d), vorzugsweise in Form einer zweiten Harmonischen der Spannung an einem Gleichstrom-Zwischenkreis (5), des elektrischen Systems führt, die vorzugsweise die doppelte Frequenz der Frequenz der einphasigen Wechselstromversorgung aufweist.

7. Verfahren nach Anspruch 6, **dadurch gekennzeichnet, dass** die in Schritt a) gemessene Größe (y) eine mechanische Größe ist, wie ein Drehmoment, das zum Antrieb des Fahrzeugs von einem Elektromotor (7, 8) erzeugt wird, der von einem an den Gleichstrom-Zwischenkreis (5) angeschlossenen Umrichter (6) gespeist wird,.

8. Verfahren nach Anspruch 6, **dadurch gekennzeichnet, dass** die in Schritt a) gemessene Größe (y) eine elektrische Größe ist, wie der Ausgangsstrom eines Umrichters (6), der an dem Gleichstrom-Zwischenkreis (5) angeschlossen ist, um elektrische Energie einem Elektromotor (7, 8) zum Antrieb des Fahrzeugs oder von Hilfslasten (9) im Fahrzeug, wie Lüfter, Pumpen, Kompressoren usw., zuzuführen.

9. Anordnung in einem Traktionssystem an Bord eines Schienenfahrzeugs (1) zur Unterdrückung des Einflusses einer ersten periodischen Störung (d) auf eine Größe (y) in dem Traktionssystem an Bord des Schienenfahrzeugs (1), wobei es der Einfluss der ersten periodischen Störung (d), welche die Form eines Wechselstromanteils in einem elektrischen System des Traktionssystems hat, auf die Größe (y) des elektrischen Systems ist, der zu unterdrücken ist, umfassend:

   - ein Element (11), das zum Messen der Größe ausgebildet ist, und
   - eine Steuereinheit (12), die dazu ausgebildet ist, Informationen über die Größe von dem Element zu empfangen;
   - wobei die Steuereinheit dazu ausgebildet ist, einen adaptiven Algorithmus (K) darauf anzuwenden, um eine zweite periodische Störung (u) zu berechnen, die bei Anwendung auf das System den Gesamteinfluss der ersten und zweiten periodischen Störung auf die Größe auf ein Minimum setzen würde, und die zweite periodische Störung (u) aufzubringen, um die Größe (y) zu beeinflussen.

10. Anordnung nach Anspruch 10, **dadurch gekennzeichnet, dass** sie ferner ein Element (20) umfasst, das zum Messen der ersten periodischen Störung (d) ausgebildet ist, und dass die Steuereinheit (12) dazu ausgebildet ist, um das Ergebnis der Messung des ersten periodischen Störung (d) zu verwenden, wenn der adaptive Algorithmus (K) auf das Ergebnis der Messung der Größe (y) angewendet wird.

11. Computerprogramm, umfassend Computerprogrammcode, um einen Computer zu veranlassen, ein Verfahren gemäß einem der Ansprüche 1 bis 8 zu implementieren, wenn das Computerprogramm von einem Computer ausgeführt wird.

12. Computerprogrammprodukt, umfassend ein nicht-flüchtiges Datenspeichermedium, das von einem Computer gelesen werden kann und auf dem der Programmcode eines Computerprogramms nach Anspruch 11 gespeichert ist.

13. Elektronische Steuereinheit, umfassend Ausführungsmittel (13), einen mit dem Ausführungsmittel verbundenen Speicher (14) und ein nicht-flüchtiges Datenspeichermedium (16), das mit dem Ausführungsmittel (13) verbunden ist und auf dem der Computerprogrammcode eines Computerprogramms nach Anspruch 11 gespeichert ist.

14. Schienenfahrzeug, **dadurch gekennzeichnet, dass** es mit einer Anordnung nach einem der Ansprüche 9 oder 10 oder einer elektronischen Steuereinheit (12) nach Anspruch 13 versehen ist.

## Revendications

1. Procédé réalisé dans un système de traction à bord d'un véhicule ferroviaire (1), pour supprimer l'influence d'une première perturbation périodique (d) sur une quantité (y) mesurée dans ledit système de traction à bord dudit véhicule ferroviaire (1), dans lequel c'est l'influence de la première perturbation périodique (d), sous la forme d'une composante CA dans un système électrique du système de traction, sur la quantité (y) dans ledit système électrique qui doit être supprimée,

le procédé comprend les étapes suivantes :

a) la mesure de ladite quantité (y),
b) l'application d'un algorithme adaptatif (K) sur le résultat de la mesure de ladite quantité (y) calculant une seconde perturbation périodique (u) qui appliquée au système rendrait l'influence totale desdites première et seconde perturbations périodiques sur ladite quantité, minimale, et
c) l'application de ladite seconde perturbation périodique (u) pour influencer ladite quantité (y).

2. Procédé selon la revendication 1, **caractérisé en ce qu'**il comprend une étape supplémentaire d) réalisée avant l'étape b) de mesure de ladite première perturbation périodique (d), et **en ce qu'**à l'étape b) le résultat de la mesure de la première perturbation périodique est utilisé lors de l'application dudit algorithme adaptatif (K) sur le résultat de la mesure de ladite quantité (y).

3. Procédé selon la revendication 1 ou 2, **caractérisé en ce que** ladite seconde perturbation périodique (u) avec la même fréquence que ladite première perturbation périodique (d) est calculée à l'étape b) et appliquée pour influencer ladite quantité (y) à l'étape c).

4. Procédé selon la revendication 2, **caractérisé en ce qu'**il comprend une étape supplémentaire e) réalisée après l'étape d) de détermination du déphasage entre la première perturbation périodique (d) et ladite quantité (y), et la valeur de ce déphasage déterminé est utilisée lors de l'application de l'algorithme adaptatif (K) sur le résultat de la mesure de ladite quantité à l'étape b).

5. Procédé selon la revendication 4, **caractérisé en ce que** la valeur de l'amplitude ($a_d$) de la première perturbation périodique (d) mesurée à l'étape d) est également utilisée lors de l'application dudit algorithme adaptatif (K) sur le résultat de la mesure de ladite quantité (y) à l'étape b).

6. Procédé selon l'une quelconque des revendications précédentes, **caractérisé en ce qu'**il est appliqué à un système avec une alimentation en CA monophasé (2) entraînant ladite première perturbation périodique (d), de préférence sous la forme d'une seconde harmonique de la tension sur une liaison intermédiaire à CC (5), du système électrique, avec de préférence deux fois la fréquence de la fréquence de ladite alimentation en CA monophasé.

7. Procédé selon la revendication 6, **caractérisé en ce que** la quantité (y) mesurée à l'étape a) est une quantité mécanique, telle qu'un couple produit par un moteur électrique (7, 8) pour une propulsion du véhicule apportée par un onduleur (6) connecté à ladite liaison intermédiaire à CC (5).

8. Procédé selon la revendication 6, **caractérisé en ce que** la quantité (y) mesurée à l'étape a) est une quantité électrique, telle que le courant de sortie d'un onduleur (6) connecté à ladite liaison intermédiaire à CC (5) pour apporter de la puissance électrique à un moteur électrique (7, 8) pour une propulsion du véhicule ou de charges auxiliaires (9), telles que des ventilateurs, des pompes, des compresseurs, etc. dans le véhicule.

9. Agencement dans un système de traction à bord d'un véhicule ferroviaire (1), pour supprimer l'influence d'une première perturbation périodique (d) sur une quantité (y) dans ledit système de traction à bord dudit véhicule ferroviaire (1), dans lequel c'est l'influence de la première perturbation périodique (d), sous la forme d'une composante CA dans un système électrique du système de traction, sur la quantité (y) dans ledit système électrique qui doit être supprimée,
comprenant

• un organe (11) configuré pour mesurer ladite quantité, et
• une unité de commande (12) configurée pour recevoir des informations depuis ledit organe au sujet de ladite quantité,
• ladite unité de commande est configurée pour appliquer un algorithme adaptatif (K) sur celle-ci de façon à calculer une seconde perturbation périodique (u) qui appliquée au système rendrait l'influence totale desdites première et seconde perturbations périodiques sur ladite quantité, minimale et pour appliquer ladite seconde perturbation périodique (u) pour influencer ladite quantité (y).

10. Agencement selon la revendication 10, **caractérisé en ce qu'**il comprend en outre un organe (20) configuré pour mesurer ladite première perturbation périodique (d), et **en ce que** l'unité de commande (12) est configurée pour utiliser le résultat de la mesure de la première perturbation périodique (d) lors de l'application dudit algorithme adaptatif (K) sur le résultat de la mesure de ladite quantité (y).

11. Programme d'ordinateur comprenant un code de programme d'ordinateur pour amener un ordinateur à implémenter un procédé selon l'une quelconque des revendications 1 à 8 lorsque le programme d'ordinateur est exécuté par un ordinateur.

12. Produit programme d'ordinateur comprenant un support de stockage de données non transitoire qui peut être lu par un ordinateur et sur lequel est stocké le code de programme d'un programme d'ordinateur selon la revendication 11.

13. Unité de commande électronique comprenant un moyen d'exécution (13), une mémoire (14) connectée au moyen d'exécution et un support de stockage de données non transitoire (16) qui est connecté au moyen d'exécution (13) et sur lequel est stocké le code de programme d'ordinateur d'un programme d'ordinateur selon la revendication 11.

14. Véhicule ferroviaire, **caractérisé en ce qu'**il est pourvu d'un agencement selon l'une quelconque des revendications 9 ou 10 ou d'une unité de commande électronique (12) selon la revendication 13.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3163731 A1